# FASCICULE DE BREVET EUROPEEN

(11) **EP 1 909 431 B1**
(45) Date de publication et mention de la délivrance du brevet: **22.03.2017**
(21) Numéro de dépôt: 07018172.2
(22) Date de dépôt: 17.09.2007
(51) Int. Cl.: H04L 9/32, G06K 19/077

(54) **Procédé d'authentification mutuelle entre une interface de communication et un processeur hôte d'un chipset NFC**
Verfahren zur gegenseitigen Authentifizierung zwischen einer Kommunikationsschnittstelle und einem Host-Prozessor eines NFC-Chipsatzes
Mutual authentication method between a communication interface and a host processor of an NFC chipset

(30) Priorité: 05.10.2006 FR 0608764
(43) Date de publication de la demande: 09.04.2008
(73) Titulaire: Inside Secure, 13590 Meyreuil (FR)
(72) Inventeur: Charrat, Bruno, 13090 Aix en Provence (FR); Martineau, Philippe, 13710 Fuveau (FR)
(74) Mandataire: Marchand, André

(56) Documents cités:
- WO-A-2004/036513
- WO-A-2006/100171
- WO-A1-02/45441
- US-A1- 2004 066 278
- JUAN CARLOS LOPEZ CALVET: "The role of RFID in the mobile phone" TELEKTRONIKK, XX, XX, no. 3, avril 2005 (2005-04), pages 131-142, XP002417982 ISSN: 0085-7130

## Description

La présente invention concerne un procédé d'authentification dans un système ou chipset NFC (Near Field Communication) comprenant un circuit d'interface NFC assurant l'émission et la réception de données sans contact.

La présente invention concerne notamment l'authentification d'un processeur sécurisé du chipset par un composant NFC du chipset. On entend par composant NFC un contrôleur (microcontrôleur) connecté à un circuit d'interface NFC.

La technologie NFC est actuellement développée par un consortium industriel regroupé sous le nom de Forum NFC (http://www.nfc-forum.org). La technologie NFC est dérivée de la technologie RFID (Radio Frequency Identification) et utilise des composants NFC présentant plusieurs modes de fonctionnement, à savoir un mode "lecteur" (Reader Mode), un mode "émulation de carte", et un mode "device " (appelé également mode "device-to-device" soit "dispositif à dispositif"). Dans le mode "lecteur", le composant NFC fonctionne comme un lecteur RFID conventionnel pour accéder en lecture ou écriture à une puce RFID (carte à puce ou étiquette sans contact). Il émet un champ magnétique, envoie des données par modulation de l'amplitude du champ magnétique et reçoit des données par modulation de charge et couplage inductif. Dans le mode "émulation", décrit par le brevet EP 1 327 222 au nom de la demanderesse, le composant NFC fonctionne de façon passive à la manière d'un transpondeur pour dialoguer avec un autre lecteur et être vu par l'autre lecteur comme une puce RFID. Le composant n'émet pas de champ magnétique, reçoit des données en démodulant un champ magnétique émis par l'autre lecteur et émet des données par modulation de l'impédance de son circuit d'antenne (modulation de charge). Dans le mode "device", le composant doit s'apparier avec un autre composant NFC se trouvant dans le même mode de fonctionnement, et chaque composant NFC se place alternativement dans un état passif (sans émission de champ) pour recevoir des données et dans un état actif (avec émission de champ) pour émettre des données.

En sus de ces trois modes de fonctionnement (d'autres modes de fonctionnement pourraient être imaginés dans le futur), un composant NFC peut mettre en oeuvre plusieurs protocoles de communication sans contact et est par exemple capable d'échanger des données suivant le protocole ISO 14443-A, le protocole ISO 14443-B, le protocole ISO 15693, etc.. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif. Un composant NFC est donc un dispositif multimode et multiprotocole. La demanderesse commercialise par exemple un composant NFC sous la désignation "MicroRead".

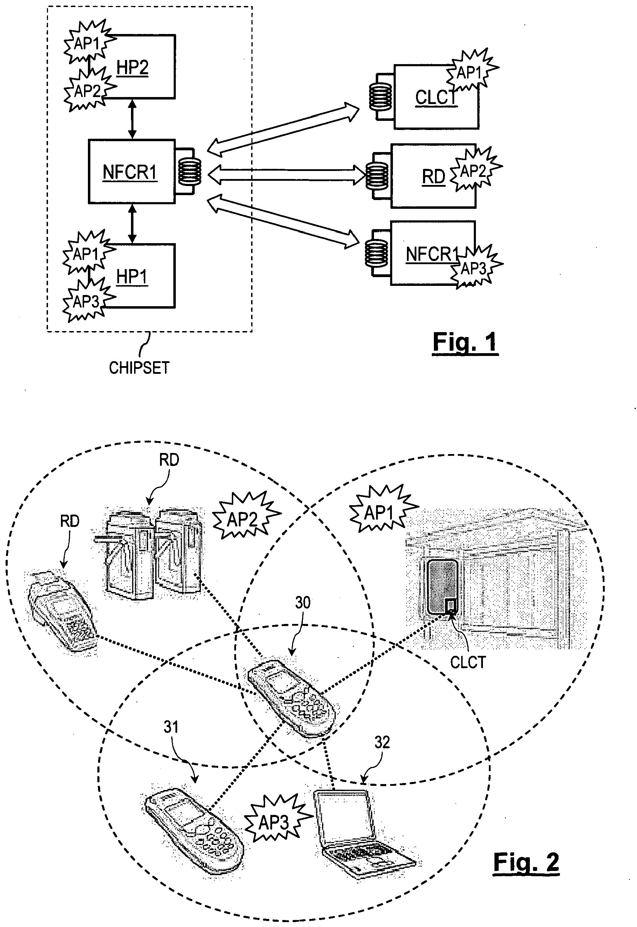

En raison de ses capacités de communication étendues, un composant NFC est destiné à être intégré dans des dispositifs portatifs tels des téléphones portables ou des PDA (Assistant Numérique Personnel). On est donc amené à réaliser un chipset NFC du type représenté en figure 1, c'est à dire un ensemble de puces comprenant un composant NFC (référencé "NFCR1") et au moins un premier processeur hôte HP1. On entend par "processeur hôte" tout circuit intégré comprenant un microprocesseur ou un microcontrôleur et qui est connecté à un port du composant NFC. Dans de nombreuses applications, le chipset NFC comprend également un second processeur hôte HP2, et parfois un troisième.

Le premier processeur hôte HP1 est le processeur principal du dispositif dans lequel le composant NFC est embarqué, tandis que le second processeur hôte HP2 est un circuit sécurisé. Le processeur hôte HP1 est généralement un processeur non sécurisé, par exemple le circuit de bande de base d'un téléphone mobile ("baseband" ou circuit de radiotéléphonie). Le processeur hôte HP2 est par exemple une carte SIM (c'est-à-dire le microcontrôleur présent dans une carte SIM). Les ressources du composant NFC sont donc mises à la disposition des processeurs HP1, HP2 pour leur permettre de gérer des applications sans contact. De telles applications sont illustrées sur la figure 2 qui représente un téléphone mobile 30 équipé du chipset NFC de la figure 1. On distingue :
1) des applications de type AP1 : le composant NFC du téléphone mobile 30 est en mode lecteur pour lire ou écrire un circuit intégré sans contact CLCT. Le téléphone mobile est dans ce cas utilisé comme un lecteur RFID. Ce type d'application peut être gratuit et consister par exemple dans la lecture de données publicitaires insérées dans un affichage publicitaire d'une aubette. L'application peut aussi être payante et consister par exemple dans la lecture d'informations réservées à des abonnés. Le programme de l'application AP1 est de préférence détenu et exécuté par le processeur HP1 si le service est gratuit ou sera de préférence détenu et exécuté par le processeur HP2 s'il est payant car il nécessite une identification de l'abonné. Ainsi, comme illustré en figure 1, une application AP1 peut être prise en charge par le processeur HP1 ou le processeur HP2.
2) des applications de type AP2 : le composant NFC du téléphone 30 est en mode émulation de carte pour être lu par des lecteurs RD conventionnels dans des applications de paiement ou de contrôle d'accès payant (machine de paiement, entrée de métro, etc.). Le téléphone mobile 30 est alors utilisé comme une carte à puce. Le programme de l'application AP2 est de préférence détenu et exécuté par le processeur sécurisé HP2, comme représenté en figure 1, car l'accès au service nécessite une identification de l'abonné.
3) des applications de type AP3 : le composant NFC du téléphone 30 est en mode "device" et dialogue avec un autre dispositif, par exemple un lecteur embarqué dans un autre téléphone mobile 31 ou dans un ordinateur 32. Ce type d'application est généralement gratuit et permet de transférer des paquets de données d'un dispositif à l'autre (transfert de fichiers en point à point notamment). Le programme de l'application AP3 est de préférence détenu et exécuté par le processeur non sécurisé HP1, comme illustré en figure 1, qui dispose d'une puissance de calcul supérieure au processeur sécurisé HP2 si celui-ci est un processeur de carte SIM.

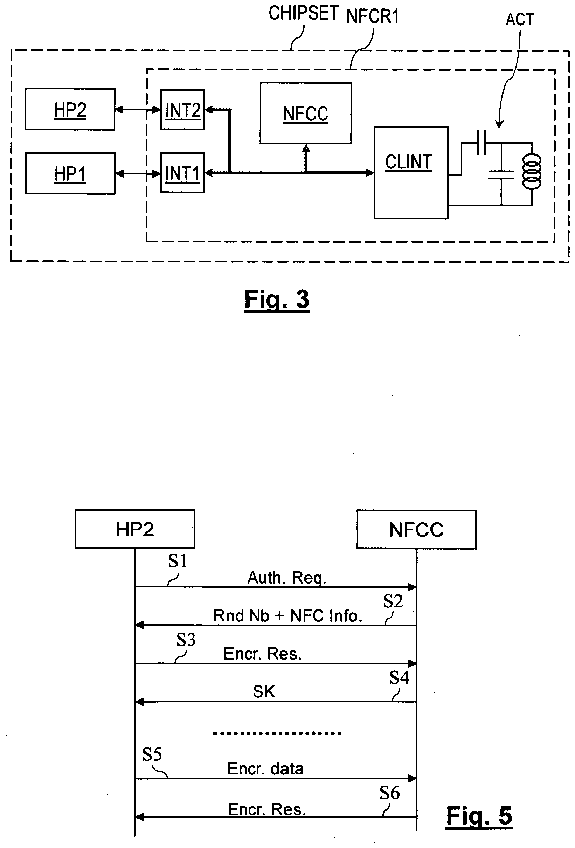

La figure 3 représente schématiquement l'architecture du composant NFC. Le composant comprend un circuit d'interface CLINT pour l'émission/réception de données sans contact, équipé d'un circuit d'antenne ACT, des interfaces de communication filaires INT1, INT2 reliées au circuit d'interface CLINT, et un contrôleur NFCC. L'interface INT1 est connectée au processeur hôte HP1, et l'interface INT2 connectée au processeur hôte HP2. L'ensemble de ces composants forme un chipset NFC.

Ainsi, la réalisation d'un chipset NFC nécessite l'établissement de canaux de communication entre chacun des processeurs hôtes HP1, HP2 et le composant NFC pour permettre aux processeurs hôtes d'émettre des données via le canal de transmission de données sans contact et pour acheminer les flux de données entrantes (données reçues via le canal de transmission de données sans contact) vers chacun des processeurs hôtes.

Toutefois, dans certaines applications par exemple du type AP2 présenté plus haut, l'un des processeurs hôtes est sécurisé. Il est donc préférable que le canal de communication entre le processeur hôte sécurisé et le composant NFC soit lui-même sécurisé notamment pour éviter que des données secrètes transmises via un canal de transmission sans contact puisse être interceptées ou modifiées, ou encore émulées par un dispositif non autorisé.

Or l'établissement d'un tel canal de transmission sécurisé nécessite généralement une authentification du processeur hôte par le composant NFC, et donc le partage d'une donnée secrète commune ou la connaissance respective de données secrètes complémentaires.

Généralement, le fabricant d'un chipset NFC est distinct du fabricant de processeurs hôtes sécurisés et de l'opérateur qui personnalise chaque processeur hôte sécurisé. En outre, un chipset NFC peut être amené à être connecté à différents processeurs sécurisés interchangeables. Le contrôleur NFC ne peut donc pas être personnalisé pour mémoriser une donnée secrète d'un processeur hôte sécurisé particulier.

Le document WO 2004/036513 décrit un ordinateur associé à une carte SIM qui peut être authentifiée par un réseau auquel l'ordinateur est connecté ou par un logiciel installé dans l'ordinateur, afin de permettre à l'ordinateur d'accéder par le réseau à des informations protégées ou d'exécuter une application sécurisée. La clé d'authentification de la carte SIM peut donc être transmise à l'ordinateur par l'intermédiaire de l'installation du logiciel ou par le réseau.

Un objectif que vise l'invention est de permettre au composant NFC d'un chipset NFC d'authentifier un processeur sécurisé afin de pouvoir établir entre eux un canal de transmission sécurisé.

Cet objectif est atteint par la prévision d'un procédé d'authentification entre un processeur hôte sécurisé et un contrôleur d'un système NFC, le contrôleur étant connecté à un circuit d'interface NFC assurant l'émission et la réception de données sans contact, le procédé comprenant des étapes de connexion du processeur hôte au contrôleur, et de vérification par le contrôleur qu'il existe une relation prédéfinie entre une première donnée mémorisée par le processeur hôte et une seconde donnée mémorisée par le contrôleur, les première et seconde données étant des données secrètes, ou formant une paire de clés publique et privée correspondantes. Selon un mode de réalisation de l'invention, le procédé comprend des étapes préalables de fourniture du processeur hôte associé d'une manière détachable à une carte mémorisant la seconde donnée, de détachement du processeur hôte de la carte pour le connecter au contrôleur, de transmission au contrôleur de la seconde donnée, et de mémorisation de celle-ci par le contrôleur.

Selon un mode de réalisation de l'invention, le contrôleur authentifie le processeur hôte en vérifiant la relation entre les première et seconde données.

Selon un mode de réalisation de l'invention, le processeur hôte authentifie le contrôleur en vérifiant la relation entre les première et seconde données.

Selon un mode de réalisation de l'invention, le procédé comprend une étape de transmission au processeur hôte par le contrôleur d'une clé de session si le processeur hôte a été authentifié par le contrôleur, la clé de session étant utilisée ensuite pour chiffrer les données échangées entre le processeur hôte et le contrôleur.

Selon un mode de réalisation de l'invention, le procédé comprend des étapes au cours desquelles :
- le processeur hôte émet à destination du contrôleur une requête d'authentification,
- le contrôleur répond à la requête en fournissant un nombre aléatoire,
- le processeur hôte chiffre le nombre aléatoire reçu à l'aide d'une fonction cryptographique utilisant comme clé de chiffrement la première donnée qu'il mémorise, et transmet le résultat du chiffrement au contrôleur,
- le contrôleur vérifie le résultat du chiffrement reçu à l'aide d'une fonction cryptographique utilisant comme clé de chiffrement la seconde donnée qu'il mémorise, l'authentification du processeur hôte ayant réussi si la vérification a été effectuée avec succès.

Selon un mode de réalisation de l'invention, les première et seconde données sont identiques.

Selon un mode de réalisation de l'invention, la première et la seconde donnée forment une paire de clés publique et privée de chiffrement liées entre elles par une relation de cryptographie asymétrique.

Selon un mode de réalisation de l'invention, la carte à laquelle le processeur hôte associé d'une manière détachable comprend un composant sans contact mémorisant la seconde donnée et la transmettant au contrôleur par le circuit d'interface NFC.

Selon un mode de réalisation de l'invention, le processeur hôte est un circuit intégré d'une carte SIM à détacher d'une carte intégrant le composant sans contact, et le système NFC est un téléphone mobile comprenant un autre processeur hôte connecté au contrôleur.

Selon un mode de réalisation de l'invention, la transmission au contrôleur de la seconde donnée est effectuée par une saisie optique d'un code optique qui est traduit ou saisi sur un clavier, puis transmis au contrôleur.

L'invention concerne également un système comprenant un contrôleur connecté à un circuit d'interface d'émission/ réception de données sans contact de type NFC, et des moyens de connexion du contrôleur à un processeur hôte, le contrôleur étant configuré pour vérifier qu'il existe une relation prédéfinie entre une première donnée mémorisée par le processeur hôte et une seconde donnée mémorisée par le contrôleur.

Selon un mode de réalisation de l'invention, le système comprend une carte mémorisant la seconde donnée et de laquelle le processeur hôte peut être détaché pour être connecté au contrôleur, le contrôleur étant configuré pour recevoir et mémoriser la seconde donnée à l'initialisation du système.

Selon un mode de réalisation de l'invention, le contrôleur est configuré pour authentifier le processeur hôte en vérifiant la relation entre les première et seconde données.

Selon un mode de réalisation de l'invention, le processeur hôte est configuré pour authentifier le contrôleur en vérifiant la relation entre les première et seconde données.

Selon un mode de réalisation de l'invention, le contrôleur est configuré pour transmettre au processeur hôte une clé de session si l'authentification du processeur hôte par le contrôleur a réussi, la clé de session étant utilisée ensuite pour chiffrer les données échangées entre le processeur hôte et le contrôleur.

Selon un mode de réalisation de l'invention :
- le processeur hôte est configuré pour émettre à destination du contrôleur une requête d'authentification,
- le contrôleur est configuré pour répondre à la requête en fournissant un nombre aléatoire,
- le processeur hôte est configuré pour chiffrer le nombre aléatoire reçu à l'aide d'une fonction cryptographique utilisant comme clé de chiffrement la première donnée qu'il mémorise, et pour transmettre le résultat du chiffrement au contrôleur, et
- le contrôleur est configuré pour vérifier le résultat reçu du chiffrement à l'aide d'une fonction cryptographique utilisant comme clé de chiffrement la seconde donnée qu'il mémorise, l'authentification du processeur hôte ayant réussi si la vérification a été effectuée avec succès.

Selon un mode de réalisation de l'invention, la carte à laquelle le processeur hôte est associé d'une manière détachable comprend un composant sans contact mémorisant la seconde donnée à transmettre sans contact au contrôleur.

Selon un mode de réalisation de l'invention, le processeur hôte est un circuit intégré d'une carte SIM détachable d'une carte à puce intégrant un composant sans contact mémorisant la seconde donnée , et le système NFC est un téléphone mobile comprenant un autre processeur hôte connecté au contrôleur.

Selon un mode de réalisation de l'invention, la transmission au contrôleur de la seconde donnée est effectuée par une saisie optique d'un code optique qui est traduit, puis transmis au contrôleur.

L'invention concerne également une carte à puce comprenant : une carte à circuit intégré détachable de la carte à puce et intégrant un processeur sécurisé mémorisant une première donnée, et - un composant sans contact couplé à un circuit d'interface NFC assurant l'émission et la réception de données sans contact, et configuré pour mémoriser et transmettre une seconde donnée, la seconde donnée étant liée à la première donnée par une relation prédéfinie.

Selon un mode de réalisation de l'invention, le processeur sécurisé est configuré pour authentifier un contrôleur en vérifiant la relation entre les première et seconde données, les première et seconde données étant des données secrètes, ou formant une paire de clés publique et privée correspondantes.

Selon un mode de réalisation de l'invention, le processeur sécurisé est configuré pour recevoir une clé de session s'il a été authentifié par un contrôleur, la clé de session étant utilisée ensuite pour chiffrer les données échangées entre le processeur hôte et le contrôleur.

Selon un mode de réalisation de l'invention, le processeur sécurisé est configuré pour :
- émettre une requête d'authentification,
- recevoir en réponse un nombre aléatoire,
- chiffrer le nombre aléatoire reçu à l'aide d'une fonction cryptographique utilisant comme clé de chiffrement la première donnée, et transmettre le résultat du chiffrement.

Selon un mode de réalisation de l'invention, le processeur sécurisé est configuré pour :
- émettre une requête d'authentification,
- recevoir en réponse un nombre aléatoire,
- chiffrer le nombre aléatoire reçu à l'aide d'une fonction cryptographique utilisant comme clé de chiffrement la première donnée cryptographique, et transmettre le résultat du chiffrement.

Selon un mode de réalisation de l'invention, le support mémorisant la seconde donnée cryptographique est un composant sans contact couplé à un circuit d'interface NFC assurant l'émission et la réception de données sans contact, et configuré pour émettre la seconde donnée cryptographique.

Selon un mode de réalisation de l'invention, la seconde donnée cryptographique est mémorisée sur le support sous la forme d'un code destiné à être lu optiquement.

Ces objets, caractéristiques et avantages ainsi que d'autres de la présente invention seront exposés plus en détail dans la description suivante du procédé de l'invention, faite à titre non limitatif en relation avec les figures jointes parmi lesquelles :
- la figure 1 précédemment décrite représente sous forme de bloc une architecture classique de chipset NFC, et des circuits sans contact avec lesquels le chipset NFC peut dialoguer,
- la figure 2 précédemment décrite illustre diverses applications d'un chipset NFC intégré dans un téléphone mobile,
- la figure 3 précédemment décrite représente sous forme de bloc l'architecture classique d'un composant NFC présent dans le chipset NFC de la figure 1,
- les figures 4A à 4C représentent un chipset NFC susceptible de recevoir un processeur hôte sécurisé interchangeable détaché d'une carte équipée d'un composant NFC, selon l'invention,
- la figure 5 représente une séquence d'authentification exécutée par un composant NFC du chipset NFC et un processeur hôte sécurisé,
- la figure 6 représente un exemple d'architecture matérielle d'un composant NFC présent dans le chipset NFC des figures 4A à 4C, et
- la figure 7 représente un exemple d'architecture logicielle du composant NFC de la figure 6.

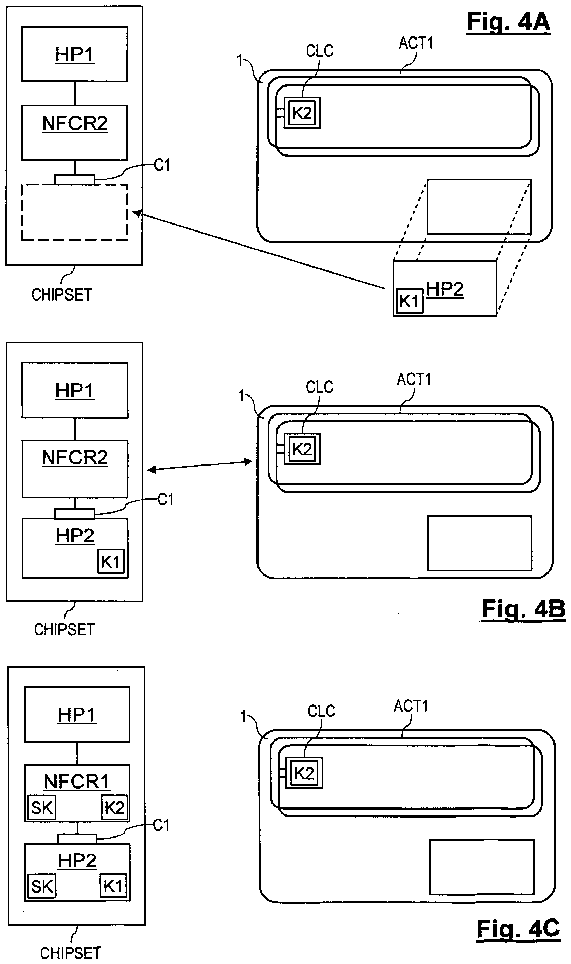

Les figures 4A à 4C illustrent de façon schématique la mise en oeuvre du procédé d'authentification selon l'invention. Le procédé est mis en oeuvre dans un chipset NFC comprenant un composant NFC référencé "NFCR2", un premier processeur hôte HP1, et des moyens de connexion C1 pour le composant NFCR2 à un second processeur hôte HP2. Le composant NFCR2 comprend les mêmes organes que le composant NFCR1 décrit plus haut, notamment un contrôleur NFCC et une interface d'émission/réception de données sans contact CLINT équipée d'un circuit d'antenne ACT.

Les moyens de connexion C1 comprennent par exemple des plages de contact prévues pour coopérer avec des plages de contact formées sur le processeur hôte. Alternativement, le processeur hôte est couplé à un circuit d'interface de communication sans contact pour communiquer avec le contrôleur NFCC.

Sur la figure 4A, le chipset NFC ne comporte pas encore de second processeur hôte, celui-ci étant intégré d'une manière détachable dans une carte à puce 1.

Selon un mode de réalisation de l'invention, la carte à puce 1 dans laquelle est intégrée le processeur hôte HP2 comprend un composant sans contact CLC comportant des organes analogues à ceux du composant NFCR1 décrit plus haut. Ainsi, le composant CLC comprend notamment un contrôleur NFCC et une interface d'émission/réception de données sans contact CLINT équipée d'un circuit d'antenne ACT1, mais pas d'interfaces de communication filaires INT1, INT2. Le processeur HP2 est détachable de la carte à puce 1 pour pouvoir être inséré dans le chipset où il est connecté au composant NFCR2 par les moyens de connexion C1.

Le processeur HP2 et le composant CLC ont été préalablement personnalisés et mémorisent ainsi chacun une donnée secrète K1, K2. Les données secrètes K1, K2 mémorisées respectivement par le processeur HP2 et le composant NFC2 sont liées entre elles par une relation qu'il est possible de vérifier. Cette relation peut être simplement une relation d'égalité ou toute autre relation, telle qu'une fonction cryptographique. Ainsi, la donnée K1 mémorisée par le processeur hôte peut être une clé privée et la donnée K2 mémorisée par le composant NFCR2 une clé publique d'une paire de clés de chiffrement asymétrique.

Le processeur hôte HP1 est par exemple le processeur principal du chipset dans lequel le composant NFCR2 est embarqué. Le composant NFCR2 et le processeur HP2 comprennent chacun un processeur sécurisé, c'est-à-dire comprenant les circuits classiques de cryptographie et d'authentification des processeurs sécurisés. Le processeur HP1 n'est pas sécurisé. Le chipset peut également comprendre un troisième processeur hôte HP3.

Par exemple, le chipset est constitué par un téléphone mobile, le processeur HP1 étant le processeur principal du téléphone, le processeur HP2 étant une puce d'une carte SIM, et le processeur HP3 est une puce de carte bancaire.

Le processeur HP2 est détaché de la carte 1 dans laquelle le composant CLC est intégré, et inséré dans le chipset où il est connecté au composant NFCR2 comme illustré par les figures 4A et 4B. Parallèlement, le composant NFCR2 est en mode lecteur à l'initialisation du chipset, et cherche à lire un composant NFC en mode passif. Lorsque le composant CLC est placé à proximité du chipset, le composant NFCR2 active le composant CLC qui lui fournit la donnée secrète K2. La donnée K2 est mémorisée par le composant NFCR2 dans une mémoire non volatile par exemple du type EEPROM (figure 4C).

Lorsque le processeur hôte HP2 est connecté au composant NFCR2 et à chaque initialisation du chipset, il déclenche une séquence d'authentification. La figure 5 représente différentes étapes d'une telle séquence d'authentification exécutée par le processeur hôte sécurisé HP2 et le contrôleur NFCC du composant NFCR2.

Au cours d'une première étape S1, le processeur HP2 émet une requête d'authentification à destination du contrôleur NFCC. A l'étape suivante S2, le contrôleur NFCC répond à la requête en fournissant un nombre aléatoire "Rnd Nb" et des informations "NFC Info." relatives au composant NFC (par exemple un numéro de série, une date de fabrication, ou encore un numéro de version de logiciel). A l'étape suivante S3, le processeur HP2 utilise la donnée secrète K1 comme clé de chiffrement pour chiffrer le nombre aléatoire reçu, et éventuellement les autres informations reçues, et transmet les données chiffrées au contrôleur NFCC.

A l'étape suivante S4, le contrôleur NFCC déchiffre les données reçues à l'aide de la donnée secrète K2 utilisée comme clé de chiffrement. Si les données déchiffrées correspondent aux données émises à l'étape S2, les données secrètes K1, K2 sont bien liées par une relation prédéfinie, et le contrôleur NFCC considère que le processeur HP2 est authentifié. Si tel est le cas, le contrôleur NFCC transmet au processeur HP2 un message lui notifiant qu'il a été authentifié et contenant une clé de session SK. La clé de session SK est par exemple un nombre aléatoire.

Si le déchiffrement des informations chiffrées reçues à l'aide de la donnée K2 ne fournit pas les informations qu'il a transmises au processeur HP2, le contrôleur NFCC considère que le processeur HP2 n'est pas authentifié, et refuse toute autre communication avec ce dernier.

Si le processeur HP2 a été authentifié, le contrôleur NFCC et le processeur HP2 peuvent échanger des informations telles que des informations de configuration et de gestion, sous une forme chiffrée utilisant la clé de session SK comme clé de chiffrement symétrique (étapes S5 et S6). Par exemple, une table de routage mémorisée dans la mémoire non volatile du contrôleur NFCC peut ainsi être transférée dans le processeur HP2 en vue d'être utilisée dans un autre chipset NFC (par exemple un autre téléphone mobile). Alternativement, les informations mémorisées dans la mémoire non volatile du contrôleur NFCC peuvent être transférées dans le composant CLC également en vue d'être utilisées dans un autre chipset NFC.

Les informations transmises à l'étape S2 peuvent également être chiffrées à l'aide de la donnée secrète K2 par le contrôleur NFCC, le résultat du chiffrement étant transmis avec les informations non chiffrées. Le processeur HP2 peut alors déchiffrer à l'aide de la donnée secrète K1 le résultat du chiffrement et vérifier l'identité entre les informations reçues et le résultat du déchiffrement. De cette manière, le processeur HP2 peut vérifier que le contrôleur NFCC dispose de la donnée secrète K2 correspondant à la donnée secrète K1, et ainsi authentifier le contrôleur NFCC. Si le processeur hôte HP2 n'authentifie pas le contrôleur NFC, il refuse de communiquer avec ce dernier.

Si le processeur HP2 installé dans le chipset NFC est remplacé par un nouveau processeur hôte, le nouveau processeur hôte ne disposera pas de la clé de session SK et donc ne pourra pas communiquer avec le contrôleur NFCC, à moins de disposer du composant CLC correspondant au nouveau processeur hôte et de lancer l'exécution de la procédure d'authentification décrite plus haut en référence à la figure 5, en déclenchant l'initialisation du chipset NFC.

### Exemple d'architecture matérielle et logicielle du composant NFCR2 permettant de mettre en oeuvre le procédé selon l'invention

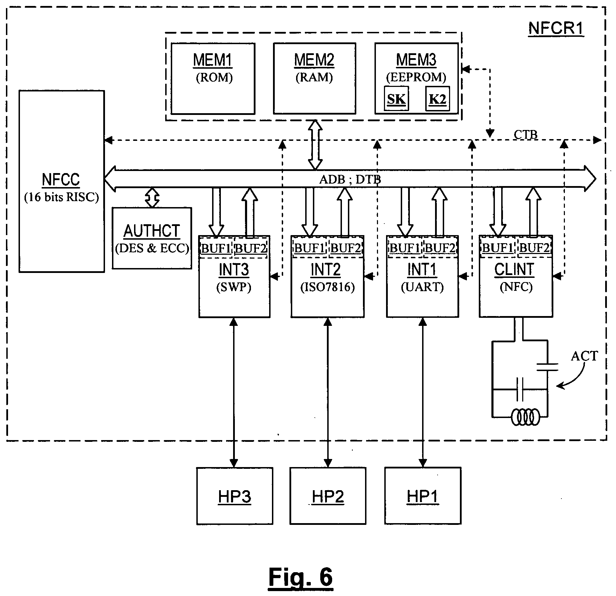

La figure 6 représente un exemple d'architecture matérielle du composant NFCR2 illustré par les figures 4A à 4C. Le composant NFCR2 comprend :
- le contrôleur NFCC et l'interface CLINT déjà décrits,
- un plan mémoire comprenant une mémoire programme MEM1 de type ROM (mémoire morte), une mémoire de données MEM2 de type RAM (mémoire vive), et une mémoire effaçable et programmable électriquement MEM3 de type EEPROM permettant d'enregistrer la donnée secrète K2 et la clé de session SK,
- un circuit d'authentification et de correction d'erreur AUTHCT comprenant des algorithmes DES (Data Encryption Standard) et ECC (Elliptic Curve Cryptography), ou d'autres algorithmes de cryptographie,
- un port de connexion INT1 de type UART (Universal Asynchronous Receiving Transmitting), auquel le processeur hôte HP1 est ici connecté,
- un port de connexion INT2 de type ISO7816 auquel le processeur hôte HP2 est ici connecté (le processeur HP2 étant supposé ici être une carte SIM),
- un port de connexion INT3 de type SWP (Single Wire Protocol) permettant de connecter le processeur hôte HP3,
- un bus de données DTB et un bus d'adresse ADB reliant le plan mémoire, le contrôleur NFCC, l'interface CLINT et les ports INT1, INT2, INT3, et
- un bus de contrôle CTB permettant au contrôleur NFCC de contrôler et d'accéder à ces divers éléments en lecture et/ou écriture.

L'interface CLINT et les ports INT1, INT2, INT3 comportent chacun un tampon d'entrée BUF1 à entrée parallèle et un tampon de sortie BUF2 à sortie parallèle accessible en écriture, respectivement en lecture, via le bus de données et le bus d'adresse. L'échange de données formant les commandes de routage ou les trames de données entre les processeurs hôtes HP1, HP2, HP3 et le contrôleur NFCC ou l'interface CLINT s'effectue ainsi par blocs de données de la taille des tampon BUF1, BUF2, et est cadencé par le contrôleur NFCC.

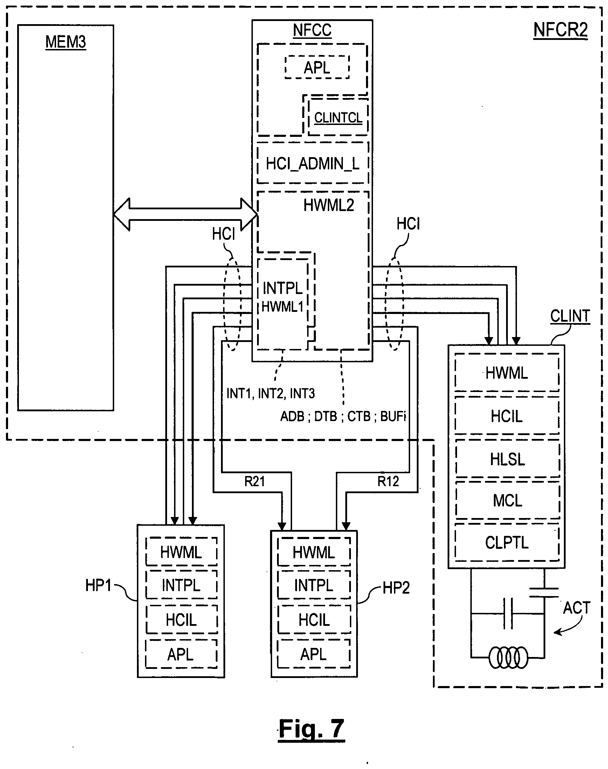

La figure 7 représente un exemple d'architecture logicielle du composant NFCR2 et des processeurs hôtes HP1, HP2. Cette architecture logicielle comprend, pour le composant NFC et les processeurs hôte du système, plusieurs couches logicielles allant du niveau le plus bas (couche liaison de données) au niveau le plus haut (couche application). La représentation qui est faite de ces couches logicielles en figure 9 est simplifiée par rapport à l'architecture logicielle réelle d'un système NFC selon l'invention mais est suffisante pour l'homme de l'art souhaitant réaliser l'invention de la manière proposée ici.

Chaque processeur hôte HP1, HP2 comprend au moins quatre couches logicielles, dans un ordre de niveau croissant :
- une couche de plus bas niveau HWML (Hardware Management Layer) qui gère le fonctionnement des éléments matériels (hardware) permettant aux processeurs hôtes d'échanger des données avec le contrôleur NFCC. Il s'agit par exemple de la couche de gestion de l'interface UART pour le processeur HP1 et de la couche de gestion de l'interface ISO7816 pour le processeur HP2.
- une couche INTPL (Interface Protocol Layer) qui gère le protocole des ports de communication INT1, INT2, INT3. Il s'agit par exemple de la couche de gestion du protocole UART pour le processeur HP1 et de la couche de gestion du protocole ISO7816 pour le processeur HP2.
- une couche HCIL (HCI Layer) qui gère le protocole HCI selon l'invention, c'est-à-dire qui gère la création d'un canal de communication. Cette couche repose sur les couches INTPL et HWML qui sont quasi transparentes pour elle.
- une couche APL (Application Layer) de haut niveau qui gère les applications RFID telles que celles représentées en figure 2 (lecture d'une carte à puce ou d'une étiquette électronique, émulation d'une carte à puce, dialogue en mode "device-to-device" avec un processeur externe pour échanger des fichiers, etc..). Cette couche peut comprendre plusieurs programmes application, chacun étant sécurisé ou non (selon les ressources internes du processeur) et chacun utilisant un type de protocole et un mode de fonctionnement de l'interface CLINT. Ainsi, cette couche de haut niveau repose sur les couches HWML, INTPL et la couche HCIL, qui sont quasi transparentes pour elle.

De façon sensiblement similaire, le contrôleur NFCC comporte les couches logicielles suivante :
- deux couches HWML1 et INTPL du même type que les couches HWML et INTPL présentes dans les processeurs hôtes. Dans un souci de simplification du schéma, ces couches sont représentées dans le processeur NFCC mais sont en réalité localisées dans les ports INT1 et INT2, qui sont considérés comme faisant partie du contrôleur, ainsi que les bus ADB, DTB, CTB. En effet le traitement des protocoles UART et 7816 est assuré ici dans les ports INT1, INT2, qui mettent à la disposition du contrôleur leurs tampons d'entrée et de sortie BUF1, BUF2 via les bus ADB, DTB, CTB.
- une autre couche de bas niveau HWML2 qui permet au contrôleur d'écrire les tampons BUF1 et de lire les tampons BUF2, via les bus ADB, DTB, CTB, en décomposant les trames de données ou les commandes en blocs de données de même taille que les tampons.
- une couche HCI-ADMIN-L ou couche d'administration du protocole HCI, qui dialogue avec les couches HCIL des processeurs hôtes HP1, HP2 en tant qu'administrateur du routage.
- une couche CLINTCL (Contactless Interface Control Layer) qui gère l'interface CLINT et qui indique à cette dernière le mode dans lequel elle doit se placer et le protocole à utiliser pour émettre des données dans un canal de communication sans contact. Cette couche contrôle également l'interface CLINT en mode réception de données sans contact et lui demande cycliquement d'effectuer un balayage des modes (mode lecteur, mode émulation et mode "device") et, dans chaque mode, de rechercher des données entrantes. Cela signifie que l'interface CLINT émet à intervalles réguliers un champ magnétique pour interroger d'éventuelles cartes ou étiquettes sans contact (ou autres objets portatifs fonctionnant sans contact) qui pourraient être présentes dans son champ d'interrogation. L'interface CLINT se place également à intervalles réguliers dans un mode d'écoute (mode "émulation") pour détecter si un lecteur en mode actif envoie des messages d'interrogation.
- une couche optionnelle APL qui peut gérer elle-même des applications, à l'instar des processeurs hôtes. En effet, bien que cela n'ait pas été décrit jusqu'à présent pour rester dans l'objet de l'invention, des applications peuvent également être prises en charge par le composant NFC lui-même.

Enfin, l'interface CLINT comporte les couches logicielles suivante :
- du côté du contrôleur NFCC, une couche de bas niveau HWML équivalente à la couche HWML2 du contrôleur NFCC, pour gérer les tampons de données BUF1, BUF2 via les bus ADB, DTB, CTB.
- une couche HCIL (comme indiqué ci-dessus) qui rend l'interface CLINT compatible avec le protocole HCI.
- du coté du circuit d'antenne ACT, des couches CLPTL (Contactless Protocol Layer) et MCL (Mode Control Layer) qui assurent le contrôle ou le traitement des signaux électriques appliqués au circuit d'antenne ACT ou reçus par celui-ci.

Il apparaîtra clairement à l'homme de l'art que la présente invention est susceptible de diverses variantes de réalisation. Ainsi l'invention n'est pas limitée à un chipset NFC comportant plusieurs processeurs hôtes et un composant NFC. Elle couvre également le contrôle de l'exécution d'applications dans un système ayant un seul processeur hôte et un composant NFC.

D'autre part, l'invention n'est pas limitée à la procédure d'authentification décrite en référence à la figure 5. D'autres procédures peuvent être mises en oeuvre pour vérifier que le processeur hôte HP2 et le composant NFCR2 possèdent des données secrètes liées entre elles par une relation prédéfinie.

De plus, la transmission de la donnée secrète K2 au composant NFCR2 peut être effectuée d'autres manières que par une liaison sans contact. Ainsi, la transmission de la donnée secrète K2 peut être effectuée par une saisie optique d'un code optique (par exemple un code à barres) ou par une saisie sur un clavier, la donnée secrète K2 saisie figurant sur la carte d'où est détachée la carte SIM (processeur hôte HP2). Le processeur hôte HP1 qui est connecté au capteur d'image ou au clavier et au contrôleur NFCC, assure alors la transmission de la donnée secrète K2 saisie vers le contrôleur NFC. Dans le cas du code optique, le processeur HP1 assure également la traduction du code optique pour obtenir la donnée secrète K2. Ces variantes sont parfaitement adaptées à l'architecture actuelle des téléphones mobiles qui possèdent un clavier et généralement un capteur d'image.

## Revendications

1. Procédé d'authentification entre un processeur hôte (HP2) sécurisé et un contrôleur (NFCC) d'un système NFC (CHIPSET), le contrôleur étant connecté à un circuit d'interface NFC (CLINT) assurant l'émission et la réception de données sans contact, le procédé comprenant des étapes de connexion du processeur hôte au contrôleur, et de vérification par le contrôleur qu'il existe une relation prédéfinie entre une première donnée (K1) mémorisée par le processeur hôte et une seconde donnée (K2) mémorisée par le contrôleur, les première et seconde données étant des données secrètes, ou formant une paire de clés publique et privée correspondantes,
**caractérisé en ce qu'**il comprend des étapes préalables de fourniture du processeur hôte (HP2) associé d'une manière détachable à une carte mémorisant la seconde donnée (K2), de détachement du processeur hôte de la carte pour le connecter au contrôleur, de transmission au contrôleur (NFCC) de la seconde donnée, et de mémorisation de celle-ci par le contrôleur.

2. Procédé selon la revendication 1, dans lequel le contrôleur (NFCC) authentifie le processeur hôte (HP2) en vérifiant la relation entre les première et seconde données (K1, K2).

3. Procédé selon la revendication 1 ou 2, dans lequel le processeur hôte (HP2) authentifie le contrôleur (NFCC) en vérifiant la relation entre les première et seconde données (K1, K2).

4. Procédé selon l'une des revendications 1 à 3, comprenant une étape de transmission au processeur hôte (HP2) par le contrôleur (NFCC) d'une clé de session (SK) si le processeur hôte a été authentifié par le contrôleur, la clé de session étant utilisée ensuite pour chiffrer les données échangées entre le processeur hôte et le contrôleur.

5. Procédé selon l'une des revendications 1 à 4, comprenant des étapes au cours desquelles :
- le processeur hôte (HP2) émet à destination du contrôleur (NFCC) une requête d'authentification ("Auth. Req."),
- le contrôleur répond à la requête en fournissant un nombre aléatoire ("Rnd Nb"),
- le processeur hôte chiffre le nombre aléatoire reçu à l'aide d'une fonction cryptographique utilisant comme clé de chiffrement la première donnée (K1) qu'il mémorise, et transmet le résultat du chiffrement au contrôleur,
- le contrôleur vérifie le résultat du chiffrement reçu à l'aide d'une fonction cryptographique utilisant comme clé de chiffrement la seconde donnée (K2) qu'il mémorise, l'authentification du processeur hôte ayant réussi si la vérification a été effectuée avec succès.

6. Procédé selon l'une des revendications 1 à 5, dans lequel les première et seconde données (K1, K2) sont identiques.

7. Procédé selon l'une des revendications 1 à 5, dans lequel la première et la seconde donnée (K1, K2) forment une paire de clés publique et privée de chiffrement liées entre elles par une relation de cryptographie asymétrique.

8. Procédé selon l'une des revendications 1 à 7, dans lequel la carte à laquelle le processeur hôte (HP2) est associé d'une manière détachable comprend un composant sans contact (CLC) mémorisant la seconde donnée (K2) et la transmettant au contrôleur (NFCC) par le circuit d'interface NFC (CLINT).

9. Procédé selon la revendication 8, dans lequel le processeur hôte (HP2) est un circuit intégré d'une carte SIM à détacher d'une carte intégrant le composant sans contact (CLC), et le système NFC (CHIPSET) est un téléphone mobile comprenant un autre processeur hôte (HP1) connecté au contrôleur (NFCC).

10. Procédé selon l'une des revendications 1 à 7, dans lequel la transmission au contrôleur (NFCC) de la seconde donnée (K2) est effectuée par une saisie optique d'un code optique qui est traduit ou saisi sur un clavier, puis transmis au contrôleur (NFCC).

11. Système (CHIPSET) comprenant un contrôleur (NFCC) connecté à un circuit d'interface d'émission/ réception de données sans contact (CLINT) de type NFC, et des moyens de connexion (C1) du contrôleur à un processeur hôte (HP2), le contrôleur étant configuré pour vérifier qu'il existe une relation prédéfinie entre une première donnée (K1) mémorisée par le processeur hôte et une seconde donnée (K2) mémorisée par le contrôleur, les première et seconde données étant secrètes ou formant une paire de clés publique et privée correspondantes,
**caractérisé en ce qu'**il comprend une carte mémorisant la seconde donnée (K2), et de laquelle le processeur hôte (HP2) peut être détaché pour être connecté au contrôleur (NFCC), le contrôleur étant configuré pour recevoir et mémoriser la seconde donnée (K2) à l'initialisation du système.

12. Système selon la revendication 11, dans lequel le contrôleur (NFCC) est configuré pour authentifier le processeur hôte (HP2) en vérifiant la relation entre les première et seconde données (K1, K2).

13. Système selon la revendication 11 ou 12, dans lequel le processeur hôte (HP2) est configuré pour authentifier le contrôleur (NFCC) en vérifiant la relation entre les première et seconde données (K1, K2).

14. Système selon l'une des revendications 11 à 13, dans lequel le contrôleur (NFCC) est configuré pour transmettre au processeur hôte (HP2) une clé de session (SK) si l'authentification du processeur hôte par le contrôleur a réussi, la clé de session étant utilisée ensuite pour chiffrer les données échangées entre le processeur hôte et le contrôleur.

15. Système selon l'une des revendications 11 à 14, dans lequel :
- le processeur hôte (HP2) est configuré pour émettre à destination du contrôleur (NFCC) une requête d'authentification ("Auth. Req."),
- le contrôleur est configuré pour répondre à la requête en fournissant un nombre aléatoire ("Rnd Nb"),
- le processeur hôte est configuré pour chiffrer le nombre aléatoire reçu à l'aide d'une fonction cryptographique utilisant comme clé de chiffrement la première donnée (K1) qu'il mémorise, et pour transmettre le résultat du chiffrement au contrôleur, et
- le contrôleur est configuré pour vérifier le résultat reçu du chiffrement à l'aide d'une fonction cryptographique utilisant comme clé de chiffrement la seconde donnée (K2) qu'il mémorise, l'authentification du processeur hôte ayant réussi si la vérification a été effectuée avec succès.

16. Système selon l'une des revendications 11 à 15, dans lequel les première et seconde données (K1, K2) sont identiques.

17. Système selon l'une des revendications 11 à 15, dans lequel la première et la seconde donnée (K1, K2) forment une paire de clés publique et privée liées entre elles par une relation de cryptographie asymétrique.

18. Système selon l'une des revendications 11 à 17, dans lequel la carte à laquelle le processeur hôte (HP2) est associé d'une manière détachable comprend un composant sans contact (CLC) mémorisant la seconde donnée (K2) à transmettre sans contact au contrôleur (NFCC).

19. Système selon la revendication 18, dans lequel le processeur hôte (HP2) est un circuit intégré d'une carte SIM détachable d'une carte à puce intégrant un composant sans contact (CLC) mémorisant la seconde donnée (K2), et le système NFC (CHIPSET) est un téléphone mobile comprenant un autre processeur hôte (HP1) connecté au contrôleur (NFCC).

20. Système selon l'une des revendications 11 à 18, dans lequel la transmission au contrôleur (NFCC) de la seconde donnée (K2) est effectuée par une saisie optique d'un code optique qui est traduit, puis transmis au contrôleur (NFCC).

21. Carte à puce comprenant :
- une carte à circuit intégré détachable de la carte à puce et intégrant un processeur sécurisé (HP2) mémorisant une première donnée (K1), et
- un composant sans contact (CLC) couplé à un circuit d'interface NFC assurant l'émission et la réception de données sans contact, et configuré pour mémoriser et transmettre une seconde donnée (K2), la seconde donnée étant liée à la première donnée par une relation prédéfinie, les première et seconde données étant des données secrètes, ou formant une paire de clés publique et privée correspondantes.

22. Carte à puce selon la revendication 21, dans laquelle le processeur sécurisé (HP2) est configuré pour authentifier un contrôleur (NFCC) en vérifiant la relation entre les première et seconde données (K1, K2).

23. Carte à puce selon la revendication 21 ou 22, dans laquelle le processeur sécurisé (HP2) est configuré pour recevoir une clé de session (SK) s'il a été authentifié par un contrôleur (NFCC), la clé de session étant utilisée ensuite pour chiffrer les données échangées entre le processeur hôte et le contrôleur.

24. Carte à puce selon l'une des revendications 21 à 23, dans laquelle le processeur sécurisé (HP2) est configuré pour :
- émettre une requête d'authentification ("Auth. Req."),
- recevoir en réponse un nombre aléatoire ("Rnd Nb"),
- chiffrer le nombre aléatoire reçu à l'aide d'une fonction cryptographique utilisant comme clé de chiffrement la première donnée (K1), et transmettre le résultat du chiffrement.

25. Carte à puce selon l'une des revendications 21 à 24, dans laquelle les première et seconde données (K1, K2) sont identiques.

26. Carte à puce selon l'une des revendications 21 à 24, dans laquelle la première donnée (K1) est une clé publique et la seconde donnée (K2) est une clé privée liée à la première donnée par une relation de cryptographie asymétrique.

## Patentansprüche

1. Verfahren zum Durchführen einer Authentifizierung zwischen einem gesicherten Hostprozessor (HP2) und einer Steuereinheit (NFCC) eines NFC-Systems (CHIPSET), wobei die Steuereinheit mit einer NFC-Schnittstellenschaltung (CLINT) verbunden ist, die das drahtlose Senden und Empfangen von Daten gewährleistet, wobei das Verfahren Schritte umfasst, die darin bestehen, den Hostprozessor mit der Steuereinheit zu verbinden, und durch die Steuereinheit zu prüfen, dass eine vorbestimmte Beziehung zwischen einem ersten vom Hostprozessor gespeicherten Datum (K1) und einem zweiten von der Steuereinheit gespeicherten Datum (K2) existiert, wobei das erste und das zweite Datum geheime Daten sind, oder ein Paar aus einem öffentlichen und einem privaten Schlüssel bilden, die einander entsprechen,
**dadurch gekennzeichnet, dass** es vorherige Schritte umfasst, die darin bestehen, den Hostprozessor (HP2) mit einer das zweite Datum (K2) speichernden Karte abtrennbar assoziiert bereitzustellen, den Hostprozessor von der Karte abzutrennen, um ihn mit der Steuereinheit zu verbinden, das zweite Datum auf die Steuereinheit (NFCC) zu übertragen, und es durch die Steuereinheit zu speichern.

2. Verfahren nach Anspruch 1, bei dem die Steuereinheit (NFCC) den Hostprozessor (HP2) authentifiziert, indem die Beziehung zwischen dem ersten und dem zweiten Datum (K1, K2) geprüft wird.

3. Verfahren nach Anspruch 1 oder 2, bei dem der Hostprozessor (HP2) die Steuereinheit (NFCC) authentifiziert, indem die Beziehung zwischen dem ersten und dem zweiten Datum (K1, K2) geprüft wird.

4. Verfahren nach einem der Ansprüche 1 bis 3, umfassend einen Schritt der Übertragung eines Sitzungsschlüssels (SK) auf den Hostprozessor (HP2) durch die Steuereinheit (NFCC), wenn der Hostprozessor durch die Steuereinheit authentifiziert worden ist, wobei der Sitzungsschlüssel dann verwendet wird, um die zwischen dem Hostprozessor und der Steuereinheit ausgetauschten Daten zu verschlüsseln.

5. Verfahren nach einem der Ansprüche 1 bis 4, umfassend Schritte, bei denen:
der Hostprozessor (HP2) eine Authentifizierungsanforderung ("Auth. Req.") an die Steuereinheit (NFCC) sendet,
die Steuereinheit die Anforderung beantwortet, indem sie eine Zufallszahl ("Rnd Nb") liefert,
der Hostprozessor die empfangene Zufallszahl mittels einer kryptographischen Funktion verschlüsselt, die das erste von ihm gespeicherte Datum (K1) als Verschlüsselungsschlüssel verwendet, und das Verschlüsselungsergebnis auf die Steuereinheit überträgt,
die Steuereinheit das empfangene Verschlüsselungsergebnis mittels einer kryptographischen Funktion prüft, die das zweite von ihm gespeicherte Datum (K2) als Verschlüsselungsschlüssel verwendet, wobei die Authentifizierung des Hostprozessors erfolgreich ist, wenn die Prüfung mit Erfolg ausgeführt worden ist.

6. Verfahren nach einem der Ansprüche 1 bis 5, bei dem das erste und das zweite Datum (K1, K2) miteinander identisch sind.

7. Verfahren nach einem der Ansprüche 1 bis 5, bei dem das erste und das zweite Datum (K1, K2) ein Paar aus einem öffentlichen und einem privaten Verschlüsselungsschlüssel bilden, die miteinander durch eine asymmetrische kryptographische Beziehung verbunden sind.

8. Verfahren nach einem der Ansprüche 1 bis 7, bei dem die Karte, mit der der Hostprozessor (HP2) abtrennbar assoziiert ist, ein drahtloses Bauteil (CLC) umfasst, das das zweite Datum (K2) speichert und es auf die Steuereinheit (NFCC) über die NFC-Schnittstellenschaltung (CLINT) überträgt.

9. Verfahren nach Anspruch 8, bei dem der Hostprozessor (HP2) eine integrierte Schaltung einer SIM-Karte ist, die von einer das drahtlose Bauteil (CLC) integrierenden Karte abzutrennen ist, und das NFC-System (CHIPSET) ein Mobiltelefon ist, das einen anderen mit der Steuereinheit (NFCC) verbundenen Hostprozessor (HP1) umfasst.

10. Verfahren nach einem der Ansprüche 1 bis 7, bei dem die Übertragung des zweiten Datums (K2) auf die Steuereinheit (NFCC) durch optische Eingabe eines optischen Codes durchgeführt wird, der übersetzt oder auf einer Tastatur eingegeben wird, und dann auf die Steuereinheit (NFCC) übertragen wird.

11. System (CHIPSET) umfassend eine Steuereinheit (NFCC), die mit einer drahtlosen Daten-Sende-/Empfangsschnittstellenschaltung (CLINT) vom NFC-Typ verbunden ist, und Verbindungsmittel (C1) zum Verbinden der Steuereinheit mit einem Hostprozessor (HP2), wobei die Steuereinheit konfiguriert ist, um zu prüfen, dass eine vorbestimmte Beziehung zwischen einem ersten vom Hostprozessor gespeicherten Datum (K1) und einem zweiten von der Steuereinheit gespeicherten Datum (K2) existiert, wobei das erste und das zweite Datum geheim sind oder ein Paar aus einem öffentlichen und einem privaten Schlüssel bilden, die einander entsprechen,
**dadurch gekennzeichnet, dass** es eine Karte umfasst, die das zweite Datum (K2) speichert, von der der Hostprozessor (HP2) abtrennbar ist, um mit der Steuereinheit (NFCC) verbunden zu werden, wobei die Steuereinheit konfiguriert ist, um das zweite Datum (K2) bei Initialisierung des Systems zu empfangen und zu speichern.

12. System nach Anspruch 11, bei dem die Steuereinheit (NFCC) konfiguriert ist, um den Hostprozessor (HP2) zu authentifizieren, indem die Beziehung zwischen dem ersten und dem zweiten Datum (K1, K2) geprüft wird.

13. System nach Anspruch 11 oder 12, bei dem der Hostprozessor (HP2) konfiguriert ist, um die Steuereinheit (NFCC) zu authentifizieren, indem die Beziehung zwischen dem ersten und dem zweiten Datum (K1, K2) geprüft wird.

14. System nach einem der Ansprüche 11 bis 13, bei dem die Steuereinheit (NFCC) konfiguriert ist, um einen Sitzungsschlüssel (SK) auf den Hostprozessor (HP2) zu übertragen, wenn die Authentifizierung des Hostprozessors durch die Steuereinheit erfolgreich ist, wobei der Sitzungsschlüssel dann verwendet wird, um die zwischen dem Hostprozessor und der Steuereinheit ausgetauschten Daten zu verschlüsseln.

15. System nach einem der Ansprüche 11 bis 14, bei dem:
der Hostprozessor (HP2) konfiguriert ist, um eine Authentifizierungsanforderung ("Auth. Req.") an die Steuereinheit (NFCC) zu senden,
die Steuereinheit konfiguriert ist, um die Anforderung zu beantworten, indem sie eine Zufallszahl ("Rnd Nb") liefert,
der Hostprozessor konfiguriert ist, um die empfangene Zufallszahl mittels einer kryptographischen Funktion zu verschlüsseln, die das erste von ihm gespeicherte Datum (K1) als Verschlüsselungsschlüssel verwendet, und um das Verschlüsselungsergebnis auf die Steuereinheit zu übertragen, und
die Steuereinheit konfiguriert ist, um das empfangene Verschlüsselungsergebnis mittels einer kryptographischen Funktion zu prüfen, die das zweite von ihm gespeicherte Datum (K2) als Verschlüsselungsschlüssel verwendet, wobei die Authentifizierung des Hostprozessors erfolgreich ist, wenn die Prüfung mit Erfolg ausgeführt worden ist.

16. System nach einem der Ansprüche 11 bis 15, bei dem das erste und das zweite Datum (K1, K2) miteinander identisch sind.

17. System nach einem der Ansprüche 11 bis 15, bei dem das erste und das zweite Datum (K1, K2) ein Paar aus einem öffentlichen und einem privaten Schlüssel bilden, die miteinander durch eine asymmetrische kryptographische Beziehung verbunden sind.

18. System nach einem der Ansprüche 11 bis 17, bei dem die Karte, mit der der Hostprozessor (HP2) abtrennbar assoziiert ist, ein drahtloses Bauteil (CLC) umfasst, das das zweite auf die Steuereinheit (NFCC) drahtlos zu übertragende Datum (K2) speichert.

19. System nach Anspruch 18, bei dem der Hostprozessor (HP2) eine integrierte Schaltung einer SIM-Karte ist, die von einer Chipkarte abtrennbar ist, die ein drahtloses das zweite Datum (K2) speicherndes Bauteil (CLC) integriert, und das NFC-System (CHIPSET) ein Mobiltelefon ist, das einen anderen mit der Steuereinheit (NFCC) verbundenen Hostprozessor (HP1) umfasst.

20. System nach einem der Ansprüche 11 bis 18, bei dem die Übertragung des zweiten Datums (K2) auf die Steuereinheit (NFCC) durch optische Eingabe eines optischen Codes durchgeführt wird, der übersetzt wird, und dann auf die Steuereinheit (NFCC) übertragen wird.

21. Chipkarte umfassend:
eine Karte mit integrierter Schaltung, die von der Chipkarte abtrennbar ist, und die einen gesicherten ein erstes Datum (K1) speichernden Prozessor (HP2) integriert, und
ein drahtloses Bauteil (CLC), das mit einer das drahtlose Senden und Empfangen von Daten gewährleistenden NFC-Schnittstellenschaltung gekoppelt ist, und das konfiguriert ist, um ein zweites Datum (K2) zu speichern und zu übertragen, wobei das zweite Datum mit dem ersten Datum durch eine vorbestimmte Beziehung verbunden ist, wobei das erste und das zweite Datum geheime Daten sind, oder ein Paar aus einem öffentlichen und einem privaten Schlüssel bilden, die einander entsprechen.

22. Chipkarte nach Anspruch 21, bei der der gesicherte Prozessor (HP2) konfiguriert ist, um eine Steuereinheit (NFCC) zu authentifizieren, indem die Beziehung zwischen dem ersten und dem zweiten Datum (K1, K2) geprüft wird.

23. Chipkarte nach Anspruch 21 oder 22, bei der der gesicherte Prozessor (HP2) konfiguriert ist, um einen Sitzungsschlüssel (SK) zu empfangen, wenn er durch eine Steuereinheit (NFCC) authentifiziert worden ist, wobei der Sitzungsschlüssel dann verwendet wird, um die zwischen dem Hostprozessor und der Steuereinheit ausgetauschten Daten zu verschlüsseln.

24. Chipkarte nach einem der Ansprüche 21 bis 23, bei der der gesicherte Prozessor (HP2) konfiguriert ist, um:
eine Authentifizierungsanforderung ("Auth. Req.") zu senden,
eine Zufallszahl ("Rnd Nb") als Antwort zu empfangen,
die empfangene Zufallszahl mittels einer kryptographischen Funktion zu verschlüsseln, die das erste Datum (K1) als Verschlüsselungsschlüssel verwendet, und um das Verschlüsselungsergebnis zu übertragen.

25. Chipkarte nach einem der Ansprüche 21 bis 24, bei der das erste und das zweite Datum (K1, K2) miteinander identisch sind.

26. Chipkarte nach einem der Ansprüche 21 bis 24, bei der das erste Datum (K1) ein öffentlicher Schlüssel ist und das zweite Datum (K2) ein privater Schlüssel ist, die mit dem ersten Datum durch eine asymmetrische kryptographische Beziehung verbunden ist.

## Claims

1. Authentication method between a secure host processor (HP2) and a controller (NFCC) of an NFC system (CHIPSET), the controller being connected to an NFC interface circuit (CLINT) sending and receiving contactless data, the method comprising steps of connecting the host processor to the controller, and of checking that there is a predefined relation between a first datum (K1) stored by the host processor and a second datum (K2) stored by the controller, the first and second data being secret data, or forming a corresponding pair of public and private keys,
**characterized in that** it comprises prior steps of supplying the host processor (HP2) associated in a removable manner with a card storing the second datum (K2) to be transmitted to the controller (NFCC), and of detaching the host processor from the card for connecting to the controller, of supplying the controller (NFCC) the second datum, and of storing the latter by the controller.

2. Method according to claim 1, wherein the controller (NFCC) authenticates the host processor (HP2) by checking the relation between the first and second data (K1, K2).

3. Method according to claim 1 or 2, wherein the host processor (HP2) authenticates the controller (NFCC) by checking the relation between the first and second data (K1, K2).

4. Method according to one of claims 1 to 3, comprising a step of the controller (NFCC) transmitting a session key (SK) to the host processor (HP2) if the host processor is authenticated by the controller, the session key being then used to cipher the data exchanged between the host processor and the controller.

5. Method according to one of claims 1 to 4, comprising steps during which:
- the host processor (HP2) sends an authentication request ("Auth. Req.") to the controller (NFCC),
- the controller answers the request by supplying a random number ("Rnd Nb"),
- the host processor ciphers the random number received by means of an encryption function using the first datum (K1) it stores as an enciphering key, and transmits the result of the enciphering to the controller,
- the controller checks the result of the enciphering received by means of an encryption function using the second datum (K2) it stores as an enciphering key, the authentication of the host processor being successful if the check was successfully performed.

6. Method according to one of claims 1 to 5, wherein the first and second data (K1, K2) are identical.

7. Method according to one of claims 1 to 5, wherein the first and second data (K1, K2) are forming a pair of public and private enciphering keys linked by an asymmetric encryption relation.

8. Method according to one of claims 1 to 7, wherein the card which the host processor (HP2) is removably associated with comprises a contactless component (CLC) storing the second datum (K2) and transmitting it to the NFC controller (NFCC) by means of the NFC interface circuit (CLINT).

9. Method according to claim 8, wherein the host processor (HP2) is an integrated circuit of a SIM card to be removed from a card integrating a contactless component (CLC), and the NFC system (CHIPSET) is a mobile telephone comprising another host processor (HP1) connected to the controller (NFCC).

10. Method according to one of claims 1 to 7, wherein the second datum (K2) is transmitted to the controller (NFCC) by optically reading an optical code which is translated or keyboarded, and then transmitted to the controller (NFCC).

11. A system (CHIPSET) comprising a controller (NFCC) connected to an interface circuit for sending/receiving contactless data (CLINT) of NFC type, and means for connecting (C1) the controller to a host processor (HP2), the controller being configured to check that there is a predefined relation between a first datum (K1) stored by the host processor and a second datum (K2) stored by the controller, the first and second data being secret data, or forming a corresponding pair of public and private keys,
**characterized in that** it comprises a card storing the second datum (K2), and from which the host processor (HP2) can be detached to be connected to the NFC controller (NFCC), the controller being configured to receive and store the second datum (K2) when the system is initialized.

12. System according to claim 11, wherein the controller (NFCC) is configured to authenticate the host processor (HP2) by checking the relation between the first and second data (K1, K2).

13. System according to claim 11 or 12, wherein the host processor (HP2) is configured to authenticate the controller (NFCC) by checking the relation between the first and second data (K1, K2).

14. System according to one of claims 11 to 13, wherein the controller (NFCC) is configured to transmit a session key (SK) to the host processor (HP2) if the authentication of the host processor by the controller was successful, the session key then being used to cipher the data exchanged between the host processor and the controller.

15. System according to one of claims 11 to 14, wherein:
- the host processor (HP2) is configured to send an authentication request ("Auth. Req.") to the controller (NFCC),
- the controller is configured to answer the request by supplying a random number ("Rnd Nb"),
- the host processor is configured to cipher the random number received by means of an encryption function using the first datum (K1) it stores as an enciphering key, and to transmit the result of the enciphering to the controller, and
- the controller is configured to check the result of the enciphering received by means of an encryption function using the second datum (K2) it stores as an enciphering key, the authentication of the host processor being successful if the check was successfully performed.

16. System according to one of claims 11 to 15, wherein the first and second data (K1, K2) are identical.

17. System according to one of claims 11 to 15, wherein the first and second data (K1, K2) are forming a pair of public and private keys linked by an asymmetric encryption relation.

18. System according to one of claims 11 to 17, wherein the card which the host processor (HP2) is associated with in a removable manner comprises a contactless component (CLC) storing the second datum (K2) to be contactless transmitted to the controller (NFCC).

19. System according to claim 18, wherein the host processor (HP2) is an integrated circuit of a SIM card removable from a smart card integrating a contactless component (CLC) storing the second datum (K2), and the NFC system (CHIPSET) is a mobile telephone comprising another host processor (HP1) connected to the controller (NFCC).

20. System according to one of claims 11 to 18, wherein the second datum (K2) is transmitted to the controller (NFCC) by optically reading an optical code which is translated and then transmitted to the controller (NFCC).

21. A smart card comprising:
- an integrated circuit card removable from the smart card and integrating a secure processor (HP2) storing a first datum (K1), and
- a contactless component (CLC) coupled to an NFC interface circuit sending and receiving contactless data, and configured for storing and transmitting a second datum (K2), the second datum being linked to the first datum by a predefined relation, the first and second data being secret data, or forming a corresponding pair of public and private keys.

22. Smart card according to claim 21, wherein the secure processor (HP2) is configured to authenticate a controller (NFCC) by checking the relation between the first and second data (K1, K2).

23. Smart card according to claim 21 or 22, wherein the secure processor (HP2) is configured to receive a session key (SK) if it has been authenticated by a controller (NFCC), the session key then being used to cipher the data exchanged between the host processor and the controller.

24. Smart card according to one of claims 21 to 23, wherein the secure processor (HP2) is configured to:
- send an authentication request ("Auth. Req.") receive a random number ("Rnd Nb")as a response,
- cipher the random number received by means of an encryption function using the first datum (K1) as an enciphering key, and transmit the result of the enciphering.

25. Smart card according to one of claims 21 to 24, wherein the first and second data (K1, K2) are identical.

26. Smart card according to one of claims 21 to 24, wherein the first datum (K1) is a public key and the second datum (K2) is a private key linked to the first datum by an asymmetric encryption relation.
